# EUROPEAN PATENT SPECIFICATION

(11) **EP 3 852 898 B1**
(45) Date of publication and mention of the grant of the patent: **23.10.2024**
(21) Application number: 19794188.3
(22) Date of filing: 20.09.2019
(51) Int. Cl.: B01D 27/14, B01D 29/05, B01D 29/07, B01D 29/21, B01D 29/54, B01D 35/00, B01D 35/147, B01D 39/18, B01D 39/20

(54) **A FILTER**
FILTER
FILTRE

(30) Priority: 21.09.2018 GB 201815428
(43) Date of publication of application: 28.07.2021
(73) Proprietor: Masterfilter Limited, Norfolk House King's Lynn Norfolk PE30 4NG (GB)
(72) Inventor: ROPER, Alan, Great Yarmouth Norfolk NR29 5DR (GB)
(74) Representative: Herrero & Asociados, S.L.
(86) International application number: PCT/GB2019/052642
(87) International publication number: WO 2020/058721

(56) References cited:
- DE-B1- 2 555 420
- GB-A- 1 604 832
- GB-A- 2 359 763
- GB-A- 965 328
- KR-A- 20040 009 962
- US-A- 4 738 776

## Description

### FIELD

Embodiments described herein generally relate to filters, in particular for use in filtering oils, water and other fluids to eliminate contaminates.

### BACKGROUND

Filters are required in a wide range of industries to remove contaminants from fluids. Examples of fluids which may benefit from filtering include inks, water and lubricants. It is known that typically a trade-off exists between filtering effectiveness and the rate of fluid flow through the filter - filters capable of removing smaller contaminants typically provide a higher resistance to flow and hence have a lower maximum throughput. This leads to a compromise being necessary in applications where the rate of fluid flow is critical, for example in the case of lubrication and/or coolant in industrial machines.

In some cases not all contaminants can be removed from fluids by filtering. This can result in uncontaminated fluid being discarded along with contaminated fluid. For example, in the case of the use of oil in engines, clean oil is often thrown away just because it contains a small quantity of damaging debris which cannot be removed. This oil, if filtered to remove the contaminants would be perfectly serviceable. Furthermore, throwing away the oil at an oil change interval does not eliminate the contamination left behind in the machine. The contaminants are often left behind in the machine and contaminate the clean incoming oil and before any replacement oil begins circulating in the system on a restart.

Frequently machines fail due to corrosion, wear or damage caused by contaminants in the lubrication fluid. This is clearly undesirable and is intensive on both resources and on the machines systems.

Many existing systems focus on particulate matter and are unable to remove moisture from oil. To do so, current systems would have to either have an impracticably large cross sectional area, making the filter impractical for use in most applications, or flow rate through the filter would be too low for the specific application.

### SUMMARY

According to the present disclosure is a filter. The filter may comprise a housing, which may define an inlet, a first outlet and/or a second outlet. The filter may further comprise a first filter element. The first filter element may be arranged between the inlet and the first outlet such that a portion of the fluid that flows into the inlet flows through the first filter element and out of the first outlet. The filter may further comprise a second filter element. The second filter element may be arranged between the inlet and the second outlet such that a portion of the fluid that flows into the inlet flows through the second filter element and out of the second outlet. The first filter element may comprise any porous material. The first filter element may comprise a sintered material filter.

The sintered material filter may be a sintered metal filter. UK Patent GB2359763 discloses the features of the preamble of claim 1,

The filter may be a dual flow filter. The filter may comprise two filter elements. Each filter element may be configured to remove contaminants (e.g. particles, other fluids, etc.) from the fluid flowing therethrough. The filter is configured such that a part of the fluid entering the filter is filtered by the first filter element and a part of the fluid entering the filter is filtered by the second filter element. The filter may be configured such that fluid flows from the inlet to the first outlet via the first filter and from the inlet to the second outlet via the second filter.

The filter may be configured such that all of the fluid that flows through the filter is filtered by one of the first and second filter elements. The first and second filter elements may have different filter characteristics.

The first filter element may provide a first resistance to fluid flow therethrough. The second filter element may provide a second resistance to fluid flow therethrough. The first resistance to fluid flow may be lower than the second resistance to fluid flow. The first filter element may have a first maximum flow rate (where the maximum flow rate may be determined by the maximum rate at which fluid can flow through the filter) and/or filtration level (where the filtration level may be determined by the smallest size particle/contaminant that can be removed from a fluid by the filter and a higher filtration level corresponds to a smaller particle/contaminant size). The second filter element may have a second maximum flow rate and/or filtration level. The maximum flow rate of the first filter element may be greater than the second filter element. The filtration level of the second filter element may be higher than the first filter element. Alternatively, the converse may be true.

The filter including two filter elements provides a user with increased flexibility with regard to filter management. The first filter element may be arranged to filter the majority of fluid flowing through the filter, with a higher flow rate and lower filtration level. The second filter may comprise a high filtration rate, to facilitate the removal of fine particles/contaminants and even, for example, water from oil. The combination of the two different filter elements allows a suitably high flow rate to be maintained such that the system in which the filter is installed can operate normally. Additionally, much smaller contaminants can be removed from the filtered fluid than would previously be possible in a filter suitable for use in such systems. As such, the system in which the filter is installed experiences fewer issues due to unfiltered fluids.

The first filter element may offer a lower resistance to flow than the second filter element. Accordingly, the first filter element may have a higher maximum flow rate than the second filter element. The filter may be configured such that more fluid passes through the first filter element than the second filter element. The first and second filter elements may be configured such that over 70%, 80%, 85%, 90%, 95% or 96% of the fluid flowing through the filter passes through the first filter element. The filter may be configured such that over 2, 4, 6, 8, 9, 19 or 24 times more fluid passes through the first filter element than the second filter element.

The filter's use of a first filter element comprising a sintered material filter does not block and accentuates the efficiency of the secondary filter by doing the "bulk of the work".

The use of a sintered material (e.g. sintered metal) filter may be particularly advantageous. A sintered material filter may allow higher flow rates therethrough compared to other filters of a corresponding filtration level. This may be due to the porosity of the sintered material.

Accordingly, the use of a sintered material (e.g. sintered metal) filter with a second filter element may allow the second filter element to have a higher filtration level (which may have a lower flow rate) than would otherwise be possible and, as such, fluid leaving the filter is, on average, cleaner than in a corresponding filter.

In the case of the fluid being a lubricant, this not only means that the lubricant is more efficient (as contaminants reduce the efficiency of a lubricant), it also means that the system in which the lubricant is operating can be serviceable for longer periods of time.

A filter of the present disclosure also rarely needs cleaning - if at all. The filter (e.g. a sintered material or metal filter) exhibits a self-cleaning type property. The first filter may be arranged (e.g. within the filter) such that fluid flows across the surface of the first filter; for example before flowing through the first filter (or a membrane thereof). The first filter may be arranged such that a portion of the fluid flowing through the first filter flows across the surface of the first filter (e.g. the membrane thereof). This effect may cause the first filter to self-clean. This may be due to particles which cannot pass through the filter being moved across the surface of the first filter, preventing the entire first filter from becoming blocked.

The use of a sintered material filter may be particularly suited to such a self-cleaning action. For example, a sintered material filter may provide little resistance to particles moving across the surface of the filter.

The first filter element is therefore unlikely to block. A filter element becoming blocked would lead to increased pressure in the filter which could damage the filter or system as a whole. Accordingly, the provision of a filter element which has a reduced likelihood of becoming blocked means that the filter, and wider system in which it is installed, can be operated without interruption for longer periods of time.

The present disclosure often refers to the use of a filter for filtering a lubricant, for example an oil product. It is to be understood, however, that the filter may be used to filter substantially any fluid.

The inclusion of a first and second filter element as in the present disclosure also results in an extremely compact design that is suitable to be interchanged with conventional full-flow filters.

The filter is configured such that it typically operates under pressure. The filter may be configured to operate in any orientation. The filter may be positioned vertically within the wider system such that an opening (as discussed later) is located at the top of the filter. In this orientation the secondary filter may be serviced and/or replaced with ease, and without spillage of fluid. The filter may be oriented differently to suit different applications.

When used in the wind energy generation industry the filter can be connected to a manifold and used as part of a filter array. An example of this would be three filters positioned in a bank. Each bank may comprise a manifold or, alternatively, a plurality of banks may be connected to a single manifold, all simultaneously receiving and filtering oil and feeding the oil back into the system in parallel. The banks may be modular and replaceable on the manifold. In this way the capacity of the manifold may be increased by factors of three.

The housing of the filter may be substantially cylindrical in shape. The housing may be a sealed housing. The housing may be configured such that the filter can operate under pressure. The housing may be designed such that the filter may be oriented differently to suit different applications, i.e. wind, automotive etc. The cylindrical housing may be oriented within the wider system such that the axis of the cylinder is vertical or horizontal.

The housing may define an axis, for example a central axis of a cylindrical housing. The inlet, first outlet and/or second outlet may each also define an axis. The axis defined by the inlet, first outlet and/or second outlet may be arranged parallel to the axis of the housing.

The housing may be configured to connect to a filter array. The housing may be configured to connect to a manifold. The housing may be sized such that several filters may fit on a manifold. For use in the wind industry the filter could be placed in a manifold in an array. This would provide a higher throughput without prejudicing the quality of filtering provided. Given the compactness of the filter, the array of filters may be of a similar, or smaller size, than existing systems.

The filter (e.g. housing) may comprise a connector configured to mechanically and/or fluidically connect the filter (e.g. the inlet, first outlet and/or second outlet) to a manifold or the wider system in which the filter is installed. The inlet and/or outlet(s) may be configured to connect to a manifold and/or the wider system, both mechanically and/or fluidically.

The housing may comprise metal, polymers or composites. Such materials may be suitable to withstand a high stress environment and temperature variations. The housing may be constructed of pressed or moulded steel (e.g. stainless steel) so that it is relatively simple to manufacture.

The housing may comprise a first side. The housing may comprise a second side. The second side may oppose the first side. The first side of the housing may be at a first axial end of the housing. The second side of the housing may be at a second axial end of the housing.

The housing may comprise an inlet, a first outlet and a second outlet.

The inlet may be arranged on the first side of the housing. The first outlet may be arranged on the first or the second side of the housing. The second outlet may be arranged on the second or the first side of the housing.

The first and second outlet may be arranged on the first and second sides of the housing, respectively. The first and second outlets may be arranged such that fluid flows in opposite axial directions within the housing when flowing through the first and second outlets.

The housing may comprise an opening. The housing may comprise a closure (e.g. cap, top, lid). The closure may be configured to detachably connect to the opening of the housing. The closure may be configured to releasably seal the housing/opening. The closure (e.g. cap, top, lid) may define the inlet, first outlet, and/or second outlet.

The closure may be arranged at, or form part of, the first or second sides of the housing.

The inlet, first outlet and/or second outlet may be configured to avoid a pressure build up in the filter. The inlet, first outlet and/or second outlet may be configured to urge at least a portion of the fluid flowing through the filter to flow out of the first outlet via the first filter element. The inlet, first outlet and/or second outlet may be configured to urge at least a portion of the fluid flowing through the filter to flow out of the second outlet via the second filter element. The inlet may have a greater cross sectional area than each of the first and second outlets individually, such that a greater volume of fluid can enter the filter than can exit through either outlet individually. The inlet may have substantially the same cross-sectional area as the first and second outlets combined, for example such that the inlet may allow the same or similar volume of fluid into the filter as the volume of fluid which can exit the filter via both outlets combined. This may ensure that there is no pressure build-up in the filter. Alternatively, the inlet may have a larger cross-sectional area than that of the first and second outlets combined. The first outlet may have a smaller cross-sectional area than the inlet. The second outlet may have a smaller cross-sectional area than the inlet

The inlet, first outlet and/or second outlet may be integrally formed with the housing and/or a closure thereof. The inlet, first outlet and/or second outlet may be machined, laser cut or water cut into the housing. The inlet, first outlet and/or second outlet may be on the top or bottom face of the cylindrical housing when oriented such that the axis of the cylinder is vertical. The inlet, first outlet and/or second outlet may be arranged on the central axis of the filter, or may be offset from the central axis of the cylindrical housing. The inlet, first outlet and/or second outlet may comprise a plurality of openings (e.g. ports, holes, valves). The openings may be arranged in a circle, for example about the axis of the housing. The openings may be radially disposed around, for example the axis of the housing. A plurality of openings forming one of the inlet, first outlet and/or second outlet may be arranged around another of the inlet, first outlet and/or second outlet. The inlet, first outlet and/or second outlet, or the openings thereof, may comprise a circular cross section. There may be eight openings forming the inlet, first outlet or second outlet.

The inlet may be arranged on the first side of the housing. The first outlet may be arranged on the first side of the housing. The inlet may comprise a plurality of openings arranged circumferentially around the first outlet. The second outlet may be on the second end of the housing.

The filter may comprise a pipe. The housing may comprise a pipe. The inlet, first outlet and/or second outlet may be attached to, or comprise, a pipe. A pipe may comprise any of a hose, tubing, a conduit, a duct etc. The inlet, first outlet and/or second outlet may protrude from the housing to form, or facilitate connection to, a pipe. The inlet, first outlet and/or second outlet may be releasably attachable to a pipe.

The inlet, first outlet and/or second outlet may comprise a connection mechanism of releasably attaching to a further fluid transfer device (for example a tube, valve, pipe etc). The inlet, first outlet and/or second outlet may comprise a nozzle for attaching to a pipe.

A fluid, for example oil, may flow from a reservoir through a pipe into the housing under pressure via the inlet. Fluid may flow from the filter, out of at least one of the outlets and into a reservoir via a pipe.

The inlet may comprise a one way valve to allow fluid to flow into the filter but not back through into the pipe from the inlet. The first and/or second outlet may comprise a one way valve to allow fluid to flow out of the filter but not back into the filter.

The filter may comprise a first filter element. The first filter element may filter out larger particles from the fluid which flows through it. The first filter element may be configured to filter out larger particles on average than the second filter element.

The first filter element may be arranged adjacent the first side of the housing. The first filter element may be arranged at one axial end of the housing. The first filter element may be positioned adjacent to the inlet. The first filter element may be positioned adjacent the first outlet.

The housing may define a first flow path. The first flow path may be from the inlet to the first outlet. The first filter element may be arranged on the first flow path, for example such that fluid flowing along the first flow path must pass through the first filter element. The filter may be arranged such that fluid which flows through the inlet must pass through the first filter element to reach the first outlet.

The first filter element (and/or the inlet and/or the first outlet) may be arranged such that fluid flows substantially radially inwardly (for example from the inlet to the first outlet) through the first filter element.

The first filter element may be configured such that a portion of the fluid which flows through the filter passes through the first filter element. The filter (e.g. the first and/or second filter element) may be configured such that the majority of the fluid which enters the housing through the inlet flows through the first filter and exits the housing through the first outlet.

The first filter element may be arranged such that fluid flowing through the filter may bypass the first filter element. The first filter element may be arranged such that fluid can flow through from the inlet to the second outlet without passing through the first filter. The first filter element may be arranged such that all fluid flowing from the inlet to the second outlet bypasses the first filter. The first filter element may be arranged such that fluid can flow from the inlet to the second filter element without passing through the first filter element.

The first filter element may define a bypass channel. The bypass channel may be arranged such that fluid can flow from the inlet to the second filter element. The bypass channel may form part of the second flow path.

The first filter element may be substantially cylindrical. The first filter element may be toroidal. The first filter element may define a gap around its circumference via which fluid can bypass the first filter element. The first filter element may be cylindrical and define a cylindrical gap between the first filter element and the housing through which fluid can flow from the inlet to the second filter element.

The first filter element may be removable from the housing for easy rearrangement/replacement of the first filter element. The filter may be configured such that the first filter is replaceable. This may allow a single filter to be used in a variety of applications or to provide a range of different filtration levels. Alternatively the first filter element may be fixed to the filter housing.

The first filter element may comprise a bracket. The first filter element may comprise a filter membrane. The filter membrane many comprise a sintered filter membrane.

The bracket may comprise an upper support (for example an upper plate or frame) and a lower support (for example a lower plate or frame). The upper support and lower support may be arranged to support the filter membrane, for example by sandwiching the filter member thereinbetween. The bracket may be configured to allow fluid to pass from the inlet to the filter membrane and from the filter membrane to the first outlet. The bracket (e.g. the upper support and/or lower support) may comprise openings through which fluid can flow. The bracket may comprise a perforated shield. The perforated shield may be arranged adjacent the filter membrane to support the filter membrane but still let fluid flow therethrough. The perforated shield may be in the form of a cylinder, surrounded by the filter membrane.

The bracket may be configured to define the bypass channel described above.

The filter membrane may be configured such that fluid, flowing from the inlet to the first outlet, can pass through the filter membrane. The filter membrane may be configured to remove contaminants (e.g. particles) from the fluid passing therethrough. The filter membrane may be arranged such that fluid can flow substantially radially (with respect to the axis of the housing) through the filter membrane (for example from the inlet to the first outlet).

The filter membrane may be located within the bracket. The filter membrane may be located between the upper and lower support.

The filter membrane may be arranged to maximise the surface area of the filter membrane exposed to fluid. The filter membrane (or the surface of the filter membrane exposed to fluid) may comprise a bend (e.g. a fold or curve), for example to maximise the surface area of the filter membrane exposed to fluid. The filter membrane (or the surface of the filter membrane expose to fluid) may comprise a series of bends.

The filter membrane may be arranged to define a convoluted or undulating path. This may increase the surface area of filter membrane through which fluid can pass, thus increasing overall fluid flow rates. The filter membrane may be folded. The filter membrane may be pleated. The first filter membrane may be arranged in an undulating profile, for example in a folded configuration. The filter membrane may be concertinaed. The filter membrane may be arranged to define lobes. The lobes may extend away from the centre of the first filter.

The first filter may comprise at least 4, 6, 8, 10, 12, 14, 16, 18 or 20 folds, concertinas, pleats or lobes.

The first filter (e.g. the membrane thereof) may be arranged such that a portion of the fluid approaching the first filter flows across a portion of the surface of the filter (membrane). The first filter (e.g. the membrane thereof) may be arranged such that a portion of the fluid approaching the first filter flows across a portion of the surface of the filter (membrane) before passing through the surface of the filter (membrane). The first filter (e.g. the membrane) may comprise a surface arranged obliquely to oncoming fluid. The first filter (e.g. the membrane) may comprise a surface arranged at an angle between 0 and 70, 0 and 50 or 0 and 30 degrees with respect to the direction of fluid flow approaching the first filter.

The first filter (e.g. filter membrane) may comprise a pleated or concertinaed arrangement which may allow a portion of the fluid to flow straight through the filter, while a portion of the fluid may flow across the surface of the filter before flowing through the porous filter structure at or near the centre of the pleat or concertina structure. Therefore contaminants which are left behind after filtration may be washed off the surface due to the pleated/contertinaed structure.

The membrane may be arranged such that the folds, pleats, concertinas or lobes of the membrane extend over at least a fifth, quarter, third or half of the diameter, length or height of the first filter.

A first filter element with large folds, pleats, concertinas or lobes has a larger surface area for filtration than otherwise.

The filter membrane may be arranged such that it alternately approaches and moves away from the axis of the housing or first filter element. The filter membrane may comprise folds or bends arranged such that the filter membrane alternatively approaches and moves away from the axis of the housing or the first filter element.

The filter membrane may define a central space e.g. a cavity.

The filter membrane may define star shape. The filter membrane may be arranged to define a cylinder with a star shaped cross-section. The filter membrane may be configured such that in a top of bottom section view it would define an n-pointed star, when *n* is any integer greater than three. The filter may be such that from a top or bottom section view it would appear to be scalloped or wavy. The central space may be situated above the first outlet in the housing. There may be a top plate and a bottom plate fixed onto the folded structure.

The filter membrane may be arranged to define a closed loop. The filter membrane may be arranged to define a substantially cylindrical (e.g. tubular shape). The top and bottom of the cylinder may be sealed by the bracket. The first filter element may be arranged such that fluid flows through the filter membrane in a substantially radial direction.

The first filter element may comprise sintered material, such as sintered metal. The filter membrane may comprise or consist of sintered material. The filter membrane may comprise sintered metal. The first filter membrane may be made entirely of sintered material (e.g. metal). The filter membrane may comprise a sintered material (e.g. metal) sheet. The filter membrane may be made by a sintering process.

The sintered material may be sintered steel. The sintered material may be stainless steel. The sintered material may comprise a metal filter cloth. The sintered material may comprise a metal filter cloth such as that manufactured by BOPP(TM). The sintered material may comprise the Duplex(TM), Betamesh(TM) or Robusta Wire Cloth(TM) produced by BOPP(TM).

The first filter may have an absolute filter rating in microns of between 15 to 89.

The filter membrane may comprise a layered structure. The filter membrane may comprise a woven construction.

The effectiveness of the sintered metal filter lies in its porosity which allows fluids to flow through it or remain captured within it. The porosity allows a fluid to move through the porous material via capillary action. Thus the folded sintered structure also enhances flow properties. Typical filtration systems are not capable of such effective filtration in a filter of this size because of the risk of increasing the pressure in the fluid, such a filter would have to be substantially bigger than the acceptable industry standard. Sintering is a very precise and accurate manufacturing method. As such, reproducibility of sintering is high and it allows high tolerances and control of porosity and, thus, the sintered metal filter may be consistently and accurately produced.

The sintered material may be a sintered metal cloth. The sintered material may allow the porosity of the filter to be tightly controlled, and may enable fine tuning the porosity to meet the requirements of the fluid to be filtered. The adaptability of the sintered metal filter makes it suitable for many different industries.

The inlet or openings thereof may be arranged such that they feed fluid directly into the folds/lobes/bends of the first filter. The openings may be arranged to feed fluid directly into the gaps between folds/bends. Once through the filter membrane the flow may be directed out of the filter through the first outlet in the first end of the housing, back into the flow of the system. The first filter element may be designed such that it does not require replacement. The sintered material filter may have a self-cleaning ability.

The filter may comprise a second filter element. The second filter element may be arranged adjacent the second side of the housing. The second filter element may be arranged adjacent the second outlet. The first filter element may be arranged on the opposite side (e.g. axial end) of the filter to the second filter element. The first filter element may be arranged closer to the first side of the housing than the second filter element. The second filter element may be arranged closer to the second side of the housing than the first filter element. The first filter element may be arranged between the first side of the housing and the second filter element. The second filter element may be arranged between the first filter element and the second side of the housing.

The second filter element may be capable of filtering out smaller particles than the first filter element. The second filter element may be configured to filter out micro particles and/or moisture. The second filter element may be configured to filter out contaminants (e.g. particles) with a diameter of 10 microns, 5 microns, 2 microns, 1 micron or less than one micron.

The housing may define a second flow path. The second flow path may be from the inlet to the second outlet. The second filter element may be arranged on the second flow path, for example such that fluid flowing along the second flow path must pass through the second filter element. The filter may be arranged such that fluid which flows through the inlet must flow through the second filter element to reach the second outlet.

The second filter element (and/or the inlet and/or the second outlet) may be arranged such that fluid flows substantially axially (for example with respect to the housing and/or the second filter element) through the second filter element.

The second filter element may be configured such that a portion of the fluid which flows through the filter passes through the second filter element. The second filter element may be configured such that a minority of the fluid which enters the housing through the inlet flows through the second filter and exits the housing through the second outlet.

The second filter element may be arranged such that fluid flowing through the filter may bypass the first filter element and flow through the second filter element. The second filter element may be arranged such that fluid can flow through from the inlet to the second outlet without passing through the first filter element. The second filter element and second outlet may be arranged such that all fluid flowing from the inlet to the second outlet bypasses the first filter. The second filter element may be arranged such that fluid can flow from the inlet to the second filter element without passing through the first filter element.

The second filter element may be substantially cylindrical.

The second filter element may be removable from the housing for easy rearrangement/replacement of the second filter element. This may allow a single filter to be used in a variety of applications or to provide a range of different filtration levels. Alternatively the second filter element may be fixed to the filter housing.

The second filter element may comprise a natural material. The second filter element may comprise compressed fibre filter. The fibre may be cellulose fibre, wood pulp, polypropylene and/or polyester. The second filter may comprise a metal material.

The second filter may comprise a wound structure. The second filter may comprise a material tightly wound to form a roll. The material may be wound on a mandrel. The second filter may be oriented such that fluid flows axially through the roll, e.g. along the surface of the sheets of the roll.

The filter may comprise a seal. A seal may be arranged to prevent fluid from flowing between the first filter element and the housing and/or the second filter element or the housing. The seal may surround the second filter element and act as a barrier between the housing wall and the second filter element forcing the fluid through the second filter element.

The filter may comprise a bypass valve. The bypass valve may form part of the first filter element or the second filter element. The bypass valve may be configured to bypass one of the first and second filter elements in the event of pressure build up in the filter.

The combination of a bypass valve and a first filter element comprising a sintered material filter may be particularly advantageous.

As noted above, sintered material filters get blocked less often than alternative comparable filters. Bypass valves are configured to avoid excess filter pressure. Accordingly, a bypass valve used in a filter according to the present disclosure is less likely to be used as often as in a filter without a sintered material (e.g. metal) filter. This means there is less wear or opportunity for the bypass valve to get damaged.

Furthermore, when a filter element is blocked and a bypass valve is in operation, particles and contaminants are no longer being removed from the fluid by the filter element - accordingly, they may interact with the bypass valve to damage or block the flow path. This can lead to failure of the bypass valve itself. In examples of the present disclosure, the combination of the sintered material filter and bypass valve not only result in a fail-safe filter when the bypass valve is operational, but also provide a filter in which the bypass valve itself is much less likely to fail.

The bypass valve may be arranged to bypass the first filter element or the second filter element. The bypass valve may be arranged to bypass the first filter membrane. The bypass valve may be configured to allow fluid to pass from the inlet to the first outlet without passing through the first filter element (e.g. the first filter membrane). The bypass valve may be configured to allow fluid to pass from the inlet to the second outlet without passing through the second filter element. The bypass valve may be arranged between the inlet and the first outlet, in parallel to the first filter element (e.g. the first filter membrane); or between the inlet and the second outlet, in parallel to the second filter element.

The bypass valve may be configured to move between a closed and an open arrangement. In the closed arrangement, fluid may be unable to pass through the bypass valve. In the open arrangement, fluid may be able to pass through the valve. In the open arrangement, the bypass valve may comprise a cross-sectional area substantially equal to that of the inlet, first outlet and/or second outlet.

The bypass valve may be configured to move from a closed arrangement to an open arrangement in response to an increased pressure in the filter (for example in the first filter element, the separation chamber or the second filter element). The increased pressure may be the pressure exceeding a threshold value. The threshold value may be a predetermined value set by a user and implemented through the selection of a specific spring in the bypass valve (see below).

The bypass valve may comprise a valve body, a valve seal and a valve spring. The valve body may define an inlet and an outlet. The valve seal may be located within the valve body. The valve spring may be configured to urge the valve seal towards the inlet of the valve body. When the valve seal is at (e.g. sealing) the valve inlet, the valve may be in a closed arrangement. When the valve seal is moved away from the valve inlet, the valve may be in an open arrangement.

The valve inlet may be fluidically connected to the separation chamber. The valve inlet may be exposed to fluid pressure inside the filter (e.g. the separation chamber). The bypass valve may be configured such that, when the pressure at the valve inlet exceeds a threshold amount, the valve seal is urged away from the valve inlet against the action of the spring. When the valve seal has moved away from the valve inlet (e.g. out of a sealing arrangement), fluid can flow through the valve. The valve has thus moved from a closed to an open arrangement.

The first filter element (e.g. the filter membrane) may be toroidal and the bypass valve may be located inside the central space defined by the first filter element (e.g. filter membrane). The filter membrane may define a closed loop and the bracket may define a central passage through the central space of the filter membrane.

The provision of a bypass valve provides a failsafe mechanism such that in the situation where the first filter element or the second filter element becomes blocked, the additional internal pressure would activate the bypass valve and the filter would revert to a full-flow filter. In applications where oil is being filtered, this may protect the function of the system as a whole by preventing oil starvation.

The filter may comprise a biasing member. A biasing member may be arranged to urge the first filter element towards the first outlet. A biasing member may be arranged to urge the second filter element towards the second outlet. These biasing members may be separate biasing members or the same biasing member. The biasing member may be arranged to urge the first and second filter elements away from each other, for example axially within the housing of the filter.

The filter may comprise a separation chamber. The separation chamber may be a cavity. The separation chamber may be arranged between the first filter element and the second filter element. The separation chamber may be arranged to receive fluid which has bypassed the first filter element. The separation chamber may be arranged to hold fluid which is to pass through the second filter element. During use, the separation chamber may be pressurised such that fluid in the separation chamber is urged through the second filter element to the second outlet.

The biasing member may be arranged to separate the first and second filter elements, thus providing the separation chamber.

The filter may comprise a support disc arranged between the second filter element and the second outlet. The support disc may be configured to compress the second filter element when installed in the filter. The support disc may comprise a hole, or series of holes. The support disc may be perforated.

The filter may comprise a cap. The cap may be configured to be installed adjacent the first and/or second filter element. The cap may be configured to prevent fluid bypassing the first filter element (or filter membrane thereof) to the first outlet. The cap may be configured to prevent fluid from flowing to the first outlet through the centre of a toroidal first filter element. The cap may be configured to prevent fluid bypassing the second filter element. The cap may be configured to prevent fluid from flowing to the second outlet through the centre of a toroidal second filter element.

Further according to the disclosure is a filter element. The filter element may be for installation in a filter as described anywhere herein. The filter element may be a first filter element as described anywhere herein. The filter element may be a second filter element as described anywhere herein.

Further according to the disclosure is a filter array. The filter array may comprise a plurality of filters, each as described herein. The filter array may comprise a plurality of filters arranged in parallel, or in series. The filter array may comprise a frame configured to support the plurality of filters. The filter array may comprise an inlet manifold, arranged to be connectable to the inlets of the filters. A filter array may comprise a manifold connecting the plurality of filters. The filter array may comprise a first and/or second outlet manifold, configured to be connectable to the plurality of first and/or second outlets, respectively.

Further according to the disclosure is a kit of parts for assembling to make a filter as described anywhere herein.

### BRIEF DESCRIPTION OF THE DRAWINGS:

Figure 1a is a top view of a filter according to the disclosure;
Figure 1b is a side view of the filter of figure 1a;
Figure 1c is a cross-section view of the filter of figure 1a;
Figure 2 is an exploded view of a first filter element and bypass valve for use in the filter of figure 1a;
Figure 3a is a top view of the first filter element;
Figure 3b is a side view of the first filter element;
Figure 3c is a cross-section view of the first filter element and bypass valve of figure 2;
Figure 4 is an exploded view of the filter of figure 1a;
Figures 5a and 5b are perspective views of a housing for use in the filter of figure 1a;
Figure 5c is a side view of the housing of figure 5a;
Figure 6a is a perspective view of a cap for use in the filter of figure 1a;
Figure 6b is a perspective view of the underside of the cap of figure 6b;
Figure 7 is a perspective view of a spring cap for use in the filter of figure 1a; and
Figure 8 is a perspective view of a support disc for use in the filter of figure 1a.

### DETAILED DESCRIPTION OF THE DRAWINGS:

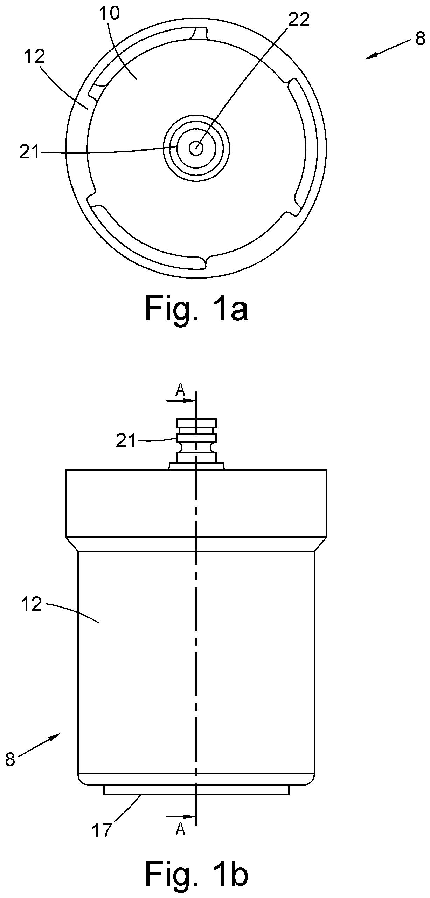

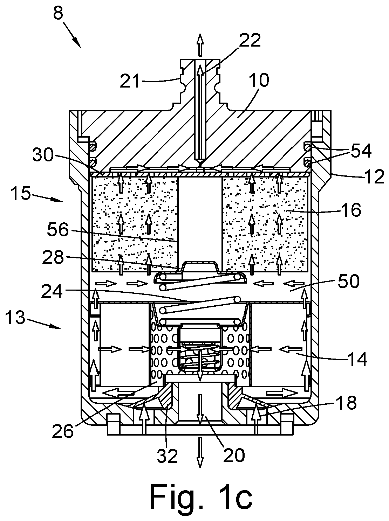

Figures 1a-c depict a filter 8 according to the disclosure. The filter comprises a housing 12, a first filter element 13 and a second filter element 15 (see figure 1c). The housing 12 is substantially cylindrical and defines an inlet 18, a first outlet 20 and a second outlet 22. Fluid that flows through the first filter element 13 leaves the filter 8 through the first outlet 20. Fluid that flows through the second filter element 15 leaves the filter 8 through the second outlet 22.

The filter 8 can be installed in a wider system with the inlet 18, first outlet 20 and second outlet 22 connected to the wider system to receive contaminated fluid and output filtered fluid.

The filter 8 provides two separate flow paths for fluid being filtered. A first part of the fluid to be filtered flows along the first flow path and the second part of the fluid to be filtered flows along the second flow path. Accordingly, fluid entering the filter is split into two parts, one of which is filtered by the first filter element 13 and the other of which is filtered by the second filter element 15.

The first filter element 13 has a lower filtration level than the second filter element 15 (i.e. the second filter element 15 can filter out smaller particles/contaminants than the first filter element 13). However, the first filter element 13 has a lower resistance to flow than the second filter element 15, meaning that more fluid can flow through the first filter element 13 than the second filter element 15 in a fixed period. As such, the majority of the fluid entering the filter 8 is filtered by the first filter element 13, which removes the majority of contaminants. A minority of the fluid entering the filter 8 is filtered by the second filter element 15, but this fluid is filtered to a higher degree than that filtered by the first filter element 13.

Both the first outlet 20 and the second outlet 22 may be connected to the wider system in which the filter 8 is installed such that the filtered fluid (e.g. oil/lubricant) can return to the system. The first outlet 20 may be connected to a high pressure inlet of a high pressure side of the wider system. The second outlet 22 may be connected to a low pressure inlet of a low pressure side of the wider system. The wider system is not shown here, but examples of such systems may be a wind turbine generator lubrication and cooling system.

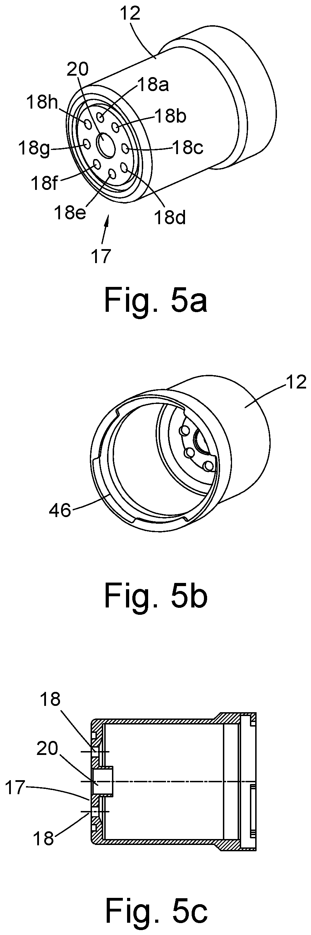

One end of the housing comprises a substantially flat surface integrally formed with the curved wall of the cylindrical housing. Although the filter 8 can be used in virtually any orientation, in the following description this surface will be referred to as the lower surface 17. The lower surface 17 comprises the first outlet 20 - located on the central axis of the cylindrical housing 12 - and the inlet 18, which comprises a plurality of radially disposed ports 18a-h (see figure 5a).

The other axial end of the cylindrical housing 12 (that at the upper end of the housing 12) comprises an opening 19 which is sealable by a cap 10. The cap 10 can be inserted in the opening 19 of the cylindrical housing 12 and rotated to secure the cap 10 relative to the housing 12. Figure 1a shows the cap 10 which fits into the top of the housing 12, where the cap 10 and the housing 12 mechanically engage. Upon rotation of the cap 10, a seal is formed between the cap 10 and the housing 12 such that fluid cannot leave the housing. The seal between the cap and the housing is provided by a pair of O-ring seals 54 located in grooves around the circumference of the cap 10 (as can be seen in figure 1c).

The cap 10 has a thin cylindrical shape. An opening in the form of a port through and along the central axis of the cap 10 (and hence also the central axis of the housing 12) defines the second outlet 22. The second outlet 22 comprises a nozzle 21 for attachment to a further nozzle, pipe or valve for transporting fluid away from the filter 8.

The housing 12 in this example is constructed from an aluminium alloy or steel, to enable it to withstand high pressures; it will be understood, however, that other materials may be suitable.

Figure 1c shows a cross section through the centre of the filter 8. The first filter element 13 is located in the lower half of the housing 12, adjacent the lower surface 17. The filter 8 comprises a lower seal 32 arranged between the first filter element 13 and the lower surface 17 to support the first filter element 13 and ensure fluid from the inlet 18 cannot flow through the first outlet 20 without flowing through either of the first or second filter element. The lower seal 32 is a rubber ring and forms a seal between the housing 12 and the first filter element 13. The lower seal 32 also acts as a non-return valve, preventing fluid from flowing out of the inlet 18.

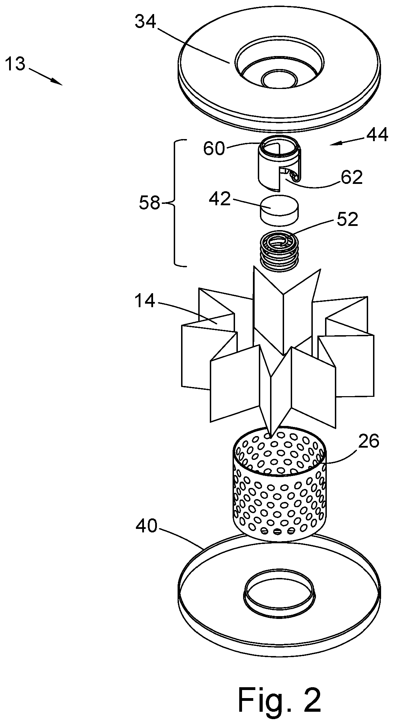

The first filter element 13 is discussed in more detail with reference to figures 2 to 3c.

Figure 1c also shows the second filter element 15 positioned above the first filter element 13, adjacent the cap 10. The second filter element 15 comprises a roll of cellulose 16. The cellulose roll 16 comprises a tightly wound roll of thin cellulose sheet - for example a cellulose fibre sheet of 0.5mm thickness with 500 pleats per linear meter and a 25 micron porosity. The cellulose roll 16 is arranged with its axis aligned with the central axis of the housing 12 and is sized to be a tight fit in the housing 12 in order to prevent fluid from flowing around the roll 16.

A spring cap 28 is biased against the lower side of the open mandrel 56 of the cellulose roll 16 in order to prevent fluid from flowing through the centre of the open mandrel 56. The spring cap 28 is biased against the second filter element 15 by a spring 24. The spring 24 is arranged between the first filter element 13 and the second filter element 15. The spring 24 urges the first filter element 13 towards the lower surface 17 and the second filter element towards the cap 10. In doing so, the spring 24 forms a separation chamber 50 between the first and second filter elements 13, 15. The separation chamber 50 is a cavity into which fluid may flow before entering the second filter element 15.

The operation of the filter 8 will now be described with reference to figure 1c. Fluid to be filtered enters the filter 8 through the inlet 18 in the lower surface 17 of the housing 12. The fluid travels along the lower side of the first filter element 13 and through a circumferential gap between the first filter element 13 and the housing 12.

A portion of the fluid flows radially inwardly through the first filter element 13 via a filter membrane 14. In the present example, about 90% of the fluid is forced through the first filter element 14, which filters contaminants such as solid particulates from the fluid. Due to the first filter element's folds there is a large cross sectional area which allows large volumes of fluid to pass through the first filter element 14 when compared to a conventional filtration material. The sintering process used to produce the steel sheet of the first filter element 14 creates a microstructure comprising a high density woven mesh. This is mesh is ideal for capturing small particles and, because of the high surface area provided by the folds, fluid flow does not slow and the pressure in the filter is not increased. The combination of features provides a high efficiency filtration. The 90% of the fluid which has passed through the first filter element 14 then passes through the perforated barrel 26 to the central space where it flows back towards the lower surface 17 and out through the outlet 20.

The portion of the fluid that does not flow through the first filter element 13 flows upwards and into the separation chamber 50 located between the first and second filter elements 13, 15. Pressure in the separation chamber 50 forces this fluid to flow up through the cellulose roll 16 of the second filter element 15. In the present example, about 10% of the fluid in the housing 12 bypasses the first filter element 14 and flows through the cellulose roll 16 of the second filter element 15, which is capable of capturing moisture particles and other ultrafine particles. This second filtration is more exhaustive and is often not practical to include in conventional filters as it would increase pressure in the filter to unacceptable levels. However, this is not the case in the present filter 8 in which it is combined with the highly efficient sintered metal filter of the first filter element 14. It is thus possible to filter up to 10% of the fluid, such that it is completely uncontaminated, using the second filter element 16 without a pressure increase across the filter.

Once the fluid passes through the second filter element 16 it passes through the perforations in the support disc 30 and exits the housing 12 through the second outlet 22. In use the second outlet 22 would have a pipe/hose attached to it to return the oil to the system and/or reservoir.

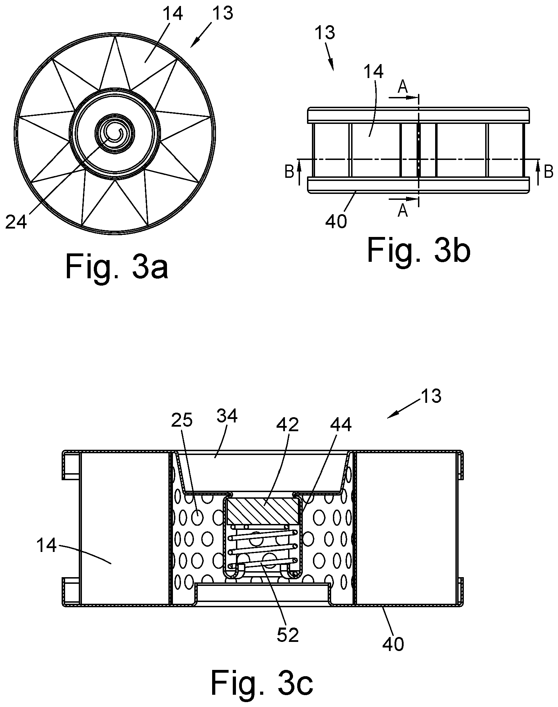

Figures 2, 3a, 3b and 3c depict the first filter element 13 for use in a filter 8 according to the disclosure.

The first filter element 13 comprises a bracket including an upper plate 34 and a lower plate 40. A filter membrane 14 comprising a sintered metal filter arranged in a folded configuration is located between the upper and lower plates 34, 40. The sintered metal filter is arranged in the shape of a nine-pointed star. Such an arrangement greatly increases the surface area of the filter membrane 14 and increases the maximum flow rate of the first filter element 13. The filter membrane 14 defines an outer and inner diameter. In this example, the outer diameter is roughly equal to that of the upper and lower plates 34, 40. The inner diameter is roughly equal to that of a perforated barrel 26 located inside the inner radius of the filter membrane 14. The perforated barrel 26 supports the filter membrane 14, transfers loads between the upper and lower plates 34, 40 and allows filtered fluid which has passed through the filter membrane 14 to enter the centre of the first filter element to exit the filter 8.

Inside the first filter element 13 a bypass valve 58 is arranged to bypass the first filter element in the event that the pressure inside the filter 8 passes a threshold value.

The bypass valve 58 comprises a body 44, a seal 42 and a valve spring 52.

The valve body 44 is located inside the perforated barrel 26, sandwiched between the upper and lower plates 34, 40. The body 44 comprises a valve inlet 60 at its upper end which is fluidically connectable to and hence is exposed to the pressure of the separation chamber 50. The body 44 comprises a valve outlet 62 towards the lower end and sides of the valve body 44. The seal 42 is located inside the body 44 and is biased by the valve spring 52 upwards, into a closed position, in which it is located adjacent the valve inlet 60 such that it seals the valve inlet 60 and prevents fluid flow therethrough. The valve body 44 has a rim which prevents the valve seal 42 from being pushed completely free of the valve body 44.

In the event that the filter membrane 14 becomes blocked such that fluid cannot flow therethrough, the pressure in the filter 8 will increase. All of the fluid entering the filter 8 will flow through the circumferential gap between the first filter element 13 and the housing 12 and will enter the separation chamber 50. The pressure in the separation chamber 50 will therefore increase. This will cause a pressure differential across the valve seal 42 and will urge the valve seal 42 against the action of the valve spring 52. Eventually, the pressure will reach a threshold value at which the valve seal 42 will move downwards towards the lower surface 17, against the action of the valve spring 52, thus opening the valve inlet 60. Fluid from the separation chamber 50 can then flow through the bypass valve 58 and out of the first outlet 20. The same process occurs if the second filter element 15 or second outlet 22 becomes blocked, causing an increase in pressure in the separation chamber 50.

Accordingly, the bypass valve 58 is configured to change the filter 8 into a bypass filter in the event that either one of the first and second filter elements 13, 15 becomes blocked, leading to an increased filter pressure.

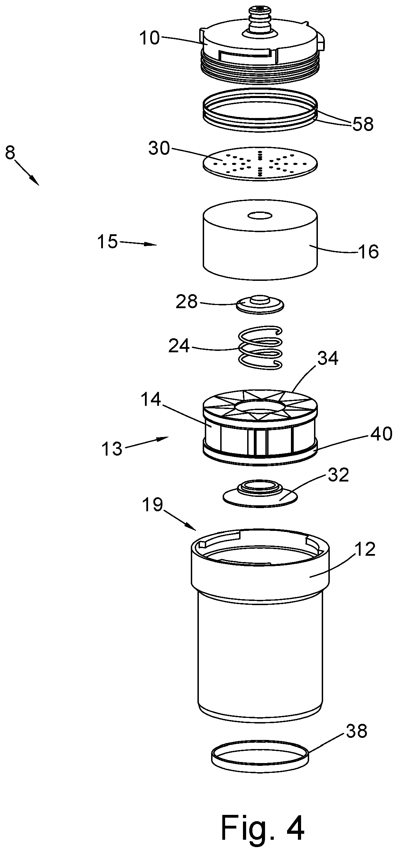

Figure 4 is an exploded view of the filter 8 of figure 1a. The filter 8 may be assembled by locating the lower seal 32 about the first outlet 20 in the lower surface 17 of the housing 12, sitting the first filter element 13 on top of the lower seal 32. The spring 24 and spring cap 28 are located on top of the first filter element 13 and are compressed as the second filter element 15 is moved into position. Finally, the support disc 30 is inserted on top of the second filter element 15. The cap 10 can then be screwed onto the housing 12 to close and seal the filter 8. A base seal 38 is located around the bottom of the lower surface 17 in order to aid in attaching and sealing the filter 8 with the surrounding wider system.

Figures 5a to 5c depict the housing 12 with eight radially disposed ports 18a-18h forming the inlet 18. The first outlet 18 is also shown, at the centre of the lower surface 17 of the housing 12. The other end of the housing 12 can be seen in Figure 5b and shows a locking thread 46 on the inner wall of the housing 12. The housing thread 46 engages the cap 10 and is used to secure the cap 10 relative to the housing 12.

The housing has an internal diameter of approximately 86mm. The first outlet has a diameter of approximately 20mm. The radially disposed inlets are approximately 8mm in diameter and positioned around approximately 44mm pitch circular diameter.

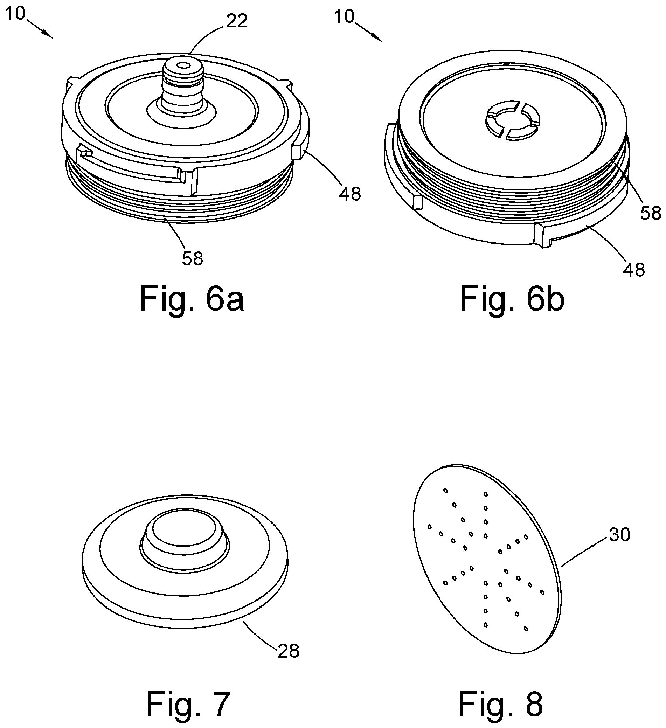

Figure 6a and 6b depict the cap 10 defining the second outlet 22 at its centre. The second outlet is approximately 5mm in diameter. The cap 10 has a thread 48 which can be seen in Figure 6b which mechanically engages with the housing 12. The nozzle of the second outlet also has a profiled outer surface for mechanically engaging with a pipe or hose to reconnect the flow with the surrounding system. The o-ring seals 58 can also be seen around the circumference of the cap 10.

Figure 7 shows the spring cap 28 which sits between the spring 24 and the second filter element 15. The spring cap is aluminium and is approximately 35mm in diameter. The spring cap 28 is dimensioned such that it has a protrusion which is substantially similar to the diameter of the mandrel opening 56 in the second filter element 15. Thus when assembled the spring 24 pushes the spring cap 28 against the second filter element 15 and creates a seal between the components.

Figure 8 shows the perforated support disc 30 which is positioned between the cap 10 and the second filter element 15. The perforated support disc 30 is fabricated from an aluminium alloy and is approximately 85mm in diameter and approximately 1.5 mm in thickness. The perforations are circular in cross section and are equally spaced about several pitch circular diameters. There are 32 perforations in this example; however there may be more or less perforations as long as their distribution permits adequate flow.

The filter is constructed such that the cap 10 can be easily removed and any of the components inside can be replaced or serviced. The second filter element 15 can be periodically replaced. The first filter element 13 is designed such that it should not require replacement but it may be periodically flushed or rinsed with water/cleaning fluid - or replaced, if required.

Examples according to the disclosure could be constructed from a variety of materials not discussed in the specific embodiments considered above. It may be preferable to construct some or all components from other metals or polymers. The filter components may also be constructed in different sizes to suit a particular application.

While certain examples have been described, these examples have been presented by way of example only, and are not intended to limit the scope of the inventions. Indeed, the novel apparatuses described herein may be embodied in a variety of other forms; furthermore, various omissions, substitutions and changes in the form of the apparatuses described herein may be made without departing from the scope as defined in the appended claims.

## Claims

1. A filter (8) comprising:
a housing (12) defining an inlet (18), a first outlet (20) and a second outlet (22);
a first filter element (13) arranged between the inlet (18) and the first outlet (20) such that a portion of the fluid that flows into the inlet (18) flows through the first filter element (13) and out of the first outlet (20);
a second filter element (15) arranged between the inlet (18) and the second outlet (22) such that a portion of the fluid that flows into the inlet (18) flows through the second filter element (15) and out of the second outlet (22);
**characterised in that** the first filter element (13) comprises a sintered material filter.

2. The filter (8) according to claim 1, wherein the sintered material filter is a sintered metal filter.

3. The filter (8) according to claim 1 or claim 2, wherein the first filter element (13) provides a first resistance to fluid flow and the second filter element (15) provides a second resistance to fluid flow; wherein the first resistance to fluid flow is lower than the second resistance to fluid flow.

4. The filter (8) according to any of the preceding claims, wherein the inlet (18) and first outlet (20) are arranged on a first side of the housing (12) and the second outlet (22) is arranged on a second side of the housing (12).

5. The filter (8) according to any of the preceding claims, wherein the housing (12) comprises an opening (19) and a closure configured to releasably seal the housing (12); wherein the closure defines the second outlet (22).

6. The filter (8) according to any of the preceding claims, wherein the inlet (18) has substantially the same cross-sectional area as the first and second outlets (20, 22) combined.

7. The filter (8) according to any of the preceding claims, wherein the first filter element (13) is arranged such that fluid flows substantially radially inwardly through the first filter element (13).

8. The filter (8) according to any of the preceding claims, wherein the filter (8) is configured such that the majority of the fluid which enters the housing (12) through the inlet (18) flows through the first filter and exits the housing (12) through the first outlet (20).

9. The filter (8) according to any of the preceding claims, wherein the first and second filter elements (13, 15) are configured such that over 85% of the fluid flowing through the filter passes through the first filter element (13).

10. The filter (8) according to any of the preceding claims, wherein the first filter element (13) is arranged such that fluid can flow from the inlet (18) to the second filter element (15) without passing through the first filter element (13).

11. The filter (8) according to any of the preceding claims, wherein the first filter may be arranged such that a portion of the fluid approaching the first filter flows across a portion of the surface of the filter before passing through the surface of the filter.

12. The filter (8) according to any of the preceding claims, wherein the first filter element (13) may comprise a filter membrane (14) configured to remove contaminants from the fluid passing therethrough and the filter membrane (14) is arranged to define a convoluted path to maximise the surface area of the filter membrane (14) exposed to fluid.

13. The filter (8) according to any of the preceding claims, wherein the second filter element (15) comprises a compressed fibre filter.

14. The filter (8) according to any of the preceding claims, wherein the filter (8) comprises a bypass valve (58) configured to bypass one of the first and second filter elements (13, 15) in the event of pressure build up in the filter.

15. The filter (8) according to any of the preceding claims, wherein the filter (8) comprises a biasing member arranged to separate the first and second filter elements (13, 15), thus providing a separation chamber (50); wherein the separation chamber (50) is arranged to hold fluid which is to pass through the second filter element (15).

## Patentansprüche

1. Filter (8), der umfasst:
ein Gehäuse (12), das einen Einlass (18), einen ersten Auslass (20) und einen zweiten Auslass (22) definiert;
einen ersten Filtereinsatz (13), der zwischen dem Einlass (18) und dem ersten Auslass (20) angeordnet ist, sodass ein Teil des Fluids, das in den Einlass (18) strömt, durch den ersten Filtereinsatz (13) und aus dem ersten Auslass (20) strömt;
einen zweiten Filtereinsatz (15), der zwischen dem Einlass (18) und dem zweiten Auslass (22) angeordnet ist, sodass ein Teil des Fluids, das in den Einlass (18) strömt, durch den zweiten Filtereinsatz (15) und aus dem zweiten (22) strömt;
**dadurch gekennzeichnet, dass**
dass der erste Filtereinsatz (13) einen Sintermaterialfilter umfasst.

2. Filter (8) nach Anspruch 1, wobei der Sintermaterialfilter ein Sintermetallfilter ist.

3. Filter (8) nach Anspruch 1 oder Anspruch 2, wobei der erste Filtereinsatz (13) einen ersten Widerstand gegen den Fluidstrom bereitstellt und der zweite Filtereinsatz (15) einen zweiten Widerstand gegen den Fluidstrom bereitstellt; wobei der erste Widerstand gegen den Fluidstrom geringer als der zweite Widerstand gegen den Fluidstrom ist.

4. Filter (8) nach einem der vorhergehenden Ansprüche, wobei der Einlass (18) und der erste Auslass (20) auf einer ersten Seite des Gehäuses (12) angeordnet sind und der zweite Auslass (22) auf einer zweiten Seite des Gehäuses (12) angeordnet ist.

5. Filter (8) nach einem der vorhergehenden Ansprüche, wobei das Gehäuse (12) eine Öffnung (19) und einen Verschluss umfasst, der so konfiguriert ist, dass er das Gehäuse (12) lösbar abdichtet; wobei der Verschluss den zweiten Auslass (22) definiert.

6. Filter (8) nach einem der vorhergehenden Ansprüche, wobei der Einlass (18) im Wesentlichen die gleiche Querschnittsfläche wie der erste und der zweite Auslass (20, 22) zusammen aufweist.

7. Filter (8) nach einem der vorhergehenden Ansprüche, wobei der erste Filtereinsatz (13) so angeordnet ist, dass Fluid im Wesentlichen radial nach innen durch den ersten Filtereinsatz (13) strömt.

8. Filter (8) nach einem der vorhergehenden Ansprüche, wobei der Filter (8) so konfiguriert ist, dass der Großteil des Fluids, das durch den Einlass (18) in das Gehäuse (12) eintritt, durch den ersten Filter strömt und aus dem Gehäuse (12) durch den ersten Auslass (20) austritt.

9. Filter (8) nach einem der vorhergehenden Ansprüche, wobei der erste und der zweite Filtereinsatz (13, 15) so konfiguriert sind, dass über 85 % des durch den Filter strömenden Fluids durch den ersten Filtereinsatz (13) gelangen.

10. Filter (8) nach einem der vorhergehenden Ansprüche, wobei der erste Filtereinsatz (13) so angeordnet ist, dass Fluid von dem Einlass (18) zu dem zweiten Filtereinsatz (15) strömen kann, ohne durch den ersten Filtereinsatz (13) zu strömen.

11. Filter (8) nach einem der vorhergehenden Ansprüche, wobei der erste Filter so angeordnet sein kann, dass ein Teil des Fluids, das sich dem ersten Filter nähert, über einen Abschnitt der Oberfläche des Filters strömt, bevor er durch die Oberfläche des Filters strömt.

12. Filter (8) nach einem der vorhergehenden Ansprüche, wobei der erste Filtereinsatz (13) eine Filtermembran (14) umfassen kann, die so konfiguriert ist, dass sie Verunreinigungen aus dem hindurchströmenden Fluid entfernt, und die Filtermembran (14) so angeordnet ist, dass sie einen gewundenen Pfad definiert, um die dem Fluid ausgesetzte Oberfläche der Filtermembran (14) zu maximieren.

13. Filter (8) nach einem der vorhergehenden Ansprüche, wobei der zweite Filtereinsatz (15) einen komprimierten Faserfilter umfasst.

14. Filter (8) nach einem der vorhergehenden Ansprüche, wobei der Filter (8) ein Umgehungsventil (58) umfasst, das konfiguriert ist, um im Falle eines Druckaufbaus in dem Filter einen des ersten und des zweiten Filtereinsatzes (13, 15) zu umgehen.

15. Filter (8) nach einem der vorhergehenden Ansprüche, wobei der Filter (8) ein Vorspannelement umfasst, das so angeordnet ist, dass es den ersten und den zweiten Filtereinsatz (13, 15) trennt und somit eine Trennkammer (50) bereitstellt; wobei die Trennkammer (50) angeordnet ist, um Fluid aufzunehmen, das durch den zweiten Filtereinsatz (15) strömen soll.

## Revendications

1. Filtre (8) comprenant :
un boîtier (12) définissant une entrée (18), une première sortie (20) et une seconde sortie (22) ;
un premier élément de filtre (13) agencé entre l'entrée (18) et la première sortie (20) de telle sorte qu'une partie du fluide qui s'écoule dans l'entrée (18) s'écoule à travers le premier élément de filtre (13) et hors de la première sortie (20) ;
un second élément de filtre (15) agencé entre l'entrée (18) et la seconde sortie (22) de telle sorte qu'une partie du fluide qui s'écoule dans l'entrée (18) s'écoule à travers le second élément de filtre (15) et hors de la seconde sortie (22) ;
**caractérisé en ce que**
le premier élément de filtre (13) comprend un filtre en matériau fritté.

2. Filtre (8) selon la revendication 1, dans lequel le filtre en matériau fritté est un filtre en métal fritté.

3. Filtre (8) selon la revendication 1 ou la revendication 2, dans lequel le premier élément de filtre (13) fournit une première résistance à l'écoulement de fluide et le second élément de filtre (15) fournit une seconde résistance à l'écoulement de fluide ; dans lequel la première résistance à l'écoulement de fluide est inférieure à la seconde résistance à l'écoulement de fluide.

4. Filtre (8) selon l'une quelconque des revendications précédentes, dans lequel l'entrée (18) et la première sortie (20) sont agencées sur un premier côté du boîtier (12) et la seconde sortie (22) est agencée sur un second côté du boîtier (12) .

5. Filtre (8) selon l'une quelconque des revendications précédentes, dans lequel le boîtier (12) comprend une ouverture (19) et une fermeture conçue pour sceller de manière libérable le boîtier (12) ; dans lequel la fermeture définit la seconde sortie (22).

6. Filtre (8) selon l'une quelconque des revendications précédentes, dans lequel l'entrée (18) a sensiblement la même zone de section transversale que les première et seconde sorties (20, 22) combinées.

7. Filtre (8) selon l'une quelconque des revendications précédentes, dans lequel le premier élément de filtre (13) est agencé de telle sorte que le fluide s'écoule sensiblement radialement vers l'intérieur à travers le premier élément de filtre (13).

8. Filtre (8) selon l'une quelconque des revendications précédentes, dans lequel le filtre (8) est conçu de telle sorte que la majorité du fluide qui entre dans le boîtier (12) à travers l'entrée (18) s'écoule à travers le premier filtre et sort du boîtier (12) à travers la première sortie (20) .

9. Filtre (8) selon l'une quelconque des revendications précédentes, dans lequel les premier et second éléments de filtre (13, 15) sont conçus de telle sorte que plus de 85 % du fluide s'écoulant à travers le filtre passe à travers le premier élément de filtre (13).

10. Filtre (8) selon l'une quelconque des revendications précédentes, dans lequel le premier élément de filtre (13) est agencé de telle sorte que le fluide peut s'écouler depuis l'entrée (18) vers le second élément de filtre (15) sans passer à travers le premier élément de filtre (13).

11. Filtre (8) selon l'une quelconque des revendications précédentes, dans lequel le premier filtre peut être agencé de telle sorte qu'une partie du fluide s'approchant du premier filtre s'écoule sur une partie de la surface du filtre avant de passer à travers la surface du filtre.

12. Filtre (8) selon l'une quelconque des revendications précédentes, dans lequel le premier élément de filtre (13) peut comprendre une membrane de filtre (14) conçue pour éliminer des contaminants du fluide passant à travers elle et la membrane de filtre (14) est agencée pour définir un trajet convoluté afin de maximiser la surface de la membrane de filtre (14) exposée au fluide.

13. Filtre (8) selon l'une quelconque des revendications précédentes, dans lequel le second élément de filtre (15) comprend un filtre à fibres comprimées.

14. Filtre (8) selon l'une quelconque des revendications précédentes, dans lequel le filtre (8) comprend une soupape de dérivation (58) conçue pour contourner l'un parmi les premier et second éléments de filtre (13, 15) en cas d'accumulation de pression dans le filtre.

15. Filtre (8) selon l'une quelconque des revendications précédentes, dans lequel le filtre (8) comprend un élément de déviation agencé pour séparer les premier et second éléments de filtre (13, 15), fournissant ainsi une chambre de séparation (50) ; dans lequel la chambre de séparation (50) est agencée pour contenir le fluide qui doit passer à travers le second élément de filtre (15).
